# FASCICULE DE BREVET EUROPEEN

(11) **EP 2 033 147 B1**
(45) Date de publication et mention de la délivrance du brevet: **26.09.2018**
(21) Numéro de dépôt: 07788997.0
(22) Date de dépôt: 13.06.2007
(51) Int. Cl.: G06K 19/077, H01Q 13/10

(54) **PROCEDE D'INTEGRATION D'UN CIRCUIT D'IDENTIFICATION DANS UN SUPPORT DE DONNEES**
VERFAHREN ZUR INTEGRATION EINER IDENTIFIKATIONSSCHALTUNG IN EIN DATENMEDIUM
METHOD OF INTEGRATING AN IDENTIFICATION CIRCUIT INTO A DATA MEDIUM

(30) Priorité: 28.06.2006 FR 0605830
(43) Date de publication de la demande: 11.03.2009
(73) Titulaire: Thomson Licensing DTV, 92130 Issy-les-Moulineaux (FR)
(72) Inventeur: LOUZIR, Ali, 35000 Rennes (FR); MINARD, Philippe, 35250 Saint-Medard-sur-Ille (FR); PINTOS, Jean-François, 35230 Bourgbarre (FR)
(74) Mandataire: Novagraaf Technologies
(86) Numéro de dépôt international: PCT/FR2007/051431
(87) Numéro de publication internationale: WO 2008/000991

(56) Documents cités:
- EP-A- 1 598 815
- WO-A2-03/092173
- US-A1- 2004 036 657

## Description

La présente invention concerne un perfectionnement aux supports de données, tels que les supports optiques. Elle concerne plus particulièrement un procédé de fabrication d'un support de données optiques permettant l'intégration d'une puce ou « tag » électronique, plus particulièrement d'un tag fonctionnant en fréquence RF, à l'intérieur du support.

La technique d'identification à distance ou à l'aide des fréquences radio connue en Europe sous le terme « Technique RFID » ou aux Etats-Unis sous le terme de « Technique RF », permet l'identification et, d'une manière plus générale, la lecture à distance d'informations incluses dans un circuit intégré ou puce grâce à un système d'interrogation utilisant des ondes radio-fréquences appelé lecteur RFID (« RFID reader » en langue anglaise). Le circuit intégré se présente sous forme d'une puce reliée à une antenne d'émission/réception généralement connue sous le terme « RFID tag » et attachée à un objet.

De manière connue, le tag RFID est activé quand il rentre dans le champ généré par le « RFID reader » auquel il est associé et renvoie vers celui-ci les informations demandées et stockées dans la puce. Les tags RFID peuvent être passifs ou actifs. Les tags actifs sont alimentés par une source d'énergie propre telle qu'une batterie tandis que les tags passifs reçoivent l'énergie du signal radio-fréquence reçu par le tag.

La technique RFID peut être utilisée dans un nombre important d'applications allant de l'étiquetage jusqu'à l'authentification des produits en passant par la logistique de pointe. Ainsi, pour les disques optiques tels que les disques compacts (CD) ou les disques versatiles numériques (DVD), l'utilisation d'un tag RFID peut être utile pour lutter contre la copie illégale et contre le vol dans les magasins. Dans ce cas, il est intéressant que le tag soit intégré à la structure du disque optique et non pas simplement attaché, par exemple sur la pochette contenant ledit disque.

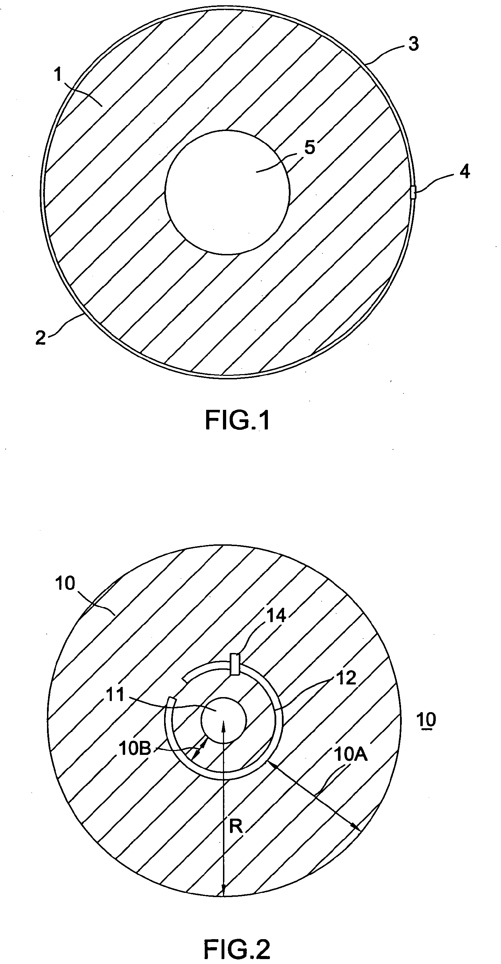

L'intégration d'un tag RFID dans la structure d'un disque optique a déjà été proposée. Ainsi, on a proposé de réaliser une antenne de type dipôle en utilisant une technique d'impression avec une encre conductrice. Toutefois, ces antennes de type dipôle souffrent d'un mauvais rendement lié d'une part aux pertes de l'encre conductrice et d'autre part à la très forte proximité de l'antenne du type dipôle avec la couche réfléchissante mais aussi conductrice qui fait partie intrinsèque de la structure du disque optique. Ce type de solution est représenté sur la figure 1. Dans cette figure, la référence 1 représente la couche réfléchissante d'un CD en aluminium. La référence 2 représente le bord du CD constitué par un substrat diélectrique, notamment en polycarbonate. La référence 3 représente l'antenne de type dipôle obtenue par l'impression sur le bord du disque optique d'une ligne réalisée à l'aide d'une encre conductrice. La référence 4 représente l'alimentation de l'antenne connectée à une puce RFID. La référence 5 représente l'ouverture centrale du disque permettant son entraînement à l'intérieur d'un lecteur.

Les simulations faites sur une antenne de ce type montrent que l'effet du à la proximité de l'antenne par rapport à la couche conductrice est important même quand l'antenne de type dipôle est imprimée au niveau du bord externe du disque, dans une partie sans métallisation. En effet, dans ce cas, le courant induit par le dipôle sur la couche conductrice se trouve quasiment en opposition de phase avec le courant dans le dipôle et a pour effet de détruire le rayonnement de celui-ci. D'autre part, l'utilisation d'une antenne de type dipôle comme élément rayonnant ne permet pas une adaptation optimale et simple de l'antenne à la puce.

Un autre type de solution a été proposé, notamment dans la demande de brevet US 2005/276210 A1. Dans ce cas, l'antenne est constituée par un ou plusieurs anneaux conducteurs réalisés par la couche conductrice de la structure du disque optique qui peut être un CD ou un DVD, ces anneaux étant couplés à la puce. Pour réaliser ces anneaux ou arcs d'anneaux conducteurs et/ou les coupler à la puce, la couche conductrice est démétallisée par endroits. Cette solution utilise comme antenne la couche conductrice, notamment la couche d'aluminium qui fait partie de la structure même d'un CD ou d'un DVD.

Elle présente toutefois un certain nombre d'inconvénients, notamment un nombre limité de résonances imposé par la dimension standard du disque optique et de la couronne conductrice. En effet il est possible d'exciter le disque conducteur à la manière d'un monopole déséquilibré. Le plan de masse de ce monopole est gravé sur une partie du périmètre du disque optique. Des simulations ont montré qu'une telle excitation génère une fréquence de résonance en dehors de la bande de fréquence désirée. Il est alors impossible de changer cette fréquence de résonance, celle-ci étant imposée principalement par la taille du disque. D'autre part, la démétallisation par endroits de la couche conductrice qui contient en fait les informations enregistrées dans le disque optique et, d'autre part, un très faible contrôle de l'impédance présentée par l'antenne limitent les performances du système RFID et, en particulier, sa portée qui dépend fortement de la qualité de couplage de l'antenne à la puce.

Il est aussi connu de la demande WO03/092173 de réaliser une antenne dipôle à l'aide de pièces métalliques se positionnant sur la partie non-conductrice d'un disque optique et pouvant délimiter une fente circulaire. Comme mentionné ci-dessus, le rayon de la fente est imposé, imposant aussi la fréquence de résonance qui ne peut pas être modifiée.

La présente invention propose donc une nouvelle solution d'intégration d'une puce ou tag radio-fréquence dans la structure d'un disque optique ou similaire permettant de remédier aux inconvénients des solutions de l'art antérieur.

La présente invention concerne plus particulièrement un procédé de réalisation de la structure d'antenne dans le support de données et son couplage au circuit intégré ou puce.

La présente invention concerne donc un procédé d'intégration d'un circuit d'identification dans un support de données formé d'au moins un substrat diélectrique recouvert d'une couche conductrice, la couche conductrice comportant une partie recevant des données et une partie sans données caractérisé en ce qu'il consiste à :
- graver dans la partie sans données de la couche conductrice, au moins une fente rayonnante formant antenne , la fente étant gravée sur une longueur L telle que L=λg/2 où λg est égale à la longueur d'onde dans la fente à la fréquence de résonance et une largeur telle que la fréquence de résonance corresponde à la fréquence de travail du circuit d'identification, et
- coupler un circuit intégré à la fente,

λg étant fonction de la permittivité effective de la fente, cette valeur dépendant de la permittivité du matériau, de son épaisseur et aussi de la largeur de la fente, il est donc possible de modifier la fréquence de résonance en ajustant la longueur et la largeur de la fente.

Selon une autre caractéristique de la présente invention, au moins deux fentes résonantes concentriques couplées électromagnétiquement l'une à l'autre sont gravées dans la partie sans données de la couche conductrice.

Selon encore une autre caractéristique de la présente invention, au moins deux fentes résonantes se recouvrant partiellement sont gravées dans la partie sans données de la couche conductrice.

Selon un mode de réalisation préférentiel de la présente invention, le circuit intégré est couplé électromagnétiquement à la fente résonante. Toutefois le circuit intégré peut être couplé par connexion directe à la fente.

Pour obtenir un couplage maximum, le circuit intégré est positionné sur la fente résonante à une longueur L' par rapport à une des extrémités de la fente résonante, de manière à optimiser l'impédance de la fente résonnante.

Le support de données est un disque optique tel qu'un disque compact (CD), un disque versatile numérique (DVD), un mini-disc ou similaire.

Le circuit intégré ou puce est un circuit RFID ou un circuit RF.

D'autres caractéristiques et avantages de la présente invention apparaîtront à la lecture de la description faite ci-après, avec référence aux dessins ci-annexés dans lesquels :
Figure 1 déjà décrite est une vue schématique de dessus d'un disque optique muni d'un tag RFID selon un mode de réalisation de l'art antérieur.
Figure 2 est une vue schématique de dessus d'un disque optique muni d'un tag RFID selon un mode de réalisation de la présente invention.
Figure 3 est une vue agrandie de la partie du disque optique recevant le tag RFID.
Figure 4 représente, pour une longueur de fente donnée, respectivement la partie réelle et la partie imaginaire des réponses fréquentielles d'impédance pour plusieurs largeurs de fente.
Figure 5 est une vue schématique de dessus d'un disque optique muni d'un tag RFID selon la présente invention, montrant différentes positions pour le circuit intégré.
Figure 6 représente des courbes donnant les parties réelles et imaginaires des réponses fréquentielles d'impédance pour les différentes positions données à la figure 5.
Figure 7 et figure 8 sont des représentations schématiques d'autres modes de réalisation conformes à la présente invention.

On décrira tout d'abord avec référence aux figures 2 à 6, un premier mode de réalisation de la présente invention. Cette description sera faite en se référant à un support de données constitué par un support de données optiques tel qu'un compact-disc (CD). Toutefois, il est évident pour l'homme de l'art que la présente invention peut s'appliquer à d'autres supports de données, notamment à des disques numériques versatiles (DVD), des mini-discs ou similaires. La structure d'un disque compact ou CD est bien connue de l'homme de l'art et ne sera pas décrite de manière très détaillée. Elle est constituée par un empilement d'au moins une couche diélectrique, plus particulièrement une couche de polycarbonate, dans laquelle sont gravés des « pits » représentant les données. Cette couche est recouverte d'une couche réfléchissante, plus particulièrement d'une couche d'aluminium, cette dernière étant recouverte d'un matériau diélectrique le plus souvent une laque anti-UV en acrylique créant un film protecteur pour les données ..

Comme représenté sur la figure 2, un disque compact a la forme d'un anneau 10 en aluminium qui, dans le cadre de la présente invention, comporte une première couronne 10a recevant les données et une seconde couronne 10b qui est une partie sans données. Dans le mode de réalisation représenté, la partie sans données se trouve au niveau de la couronne interne. Toutefois, on peut envisager, sans sortir du cadre de l'invention, de réaliser cette partie sans données au niveau d'une couronne externe. De plus, le disque comporte un trou central 11 permettant de le monter sur l'axe de rotation d'un lecteur.

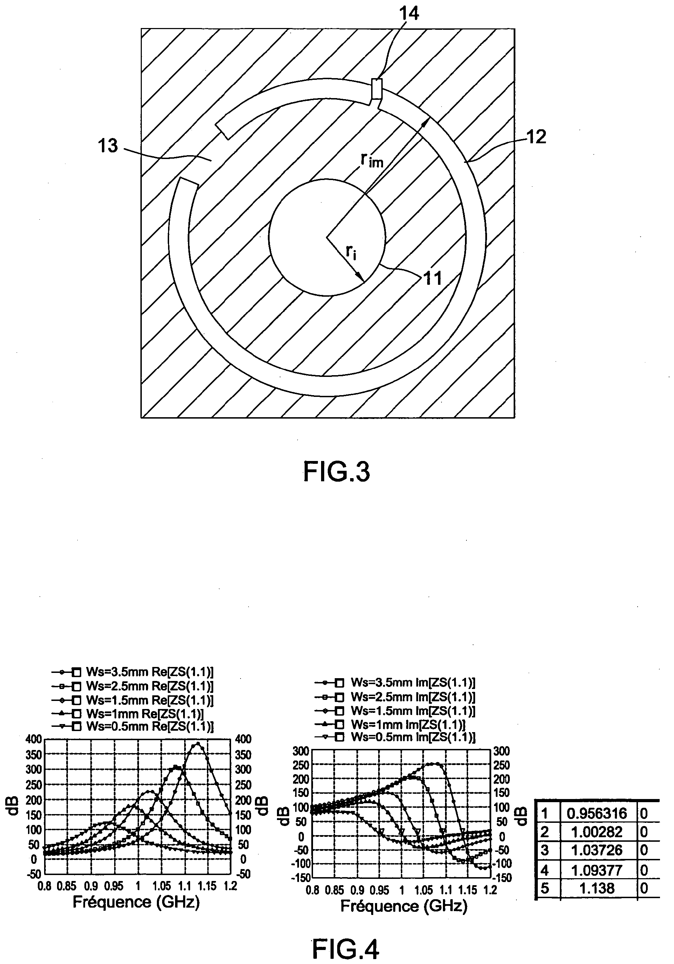

Comme représenté sur la figure 3 qui est une vue agrandie de la partie centrale du disque de la figure 2, le trou central 11 présente un rayon rᵢ. Ce rayon rᵢ détermine le périmètre interne de la couronne sans données qui s'étend jusqu'à un cercle de rayon rᵢₘ de telle sorte que la couronne de la partie sans données s'étend sur une largeur égale à rᵢₘ - rᵢ.

Conformément à la présente invention et comme représenté sur les figures 2 et 3, dans cette zone sans données a été gravée une fente 12 présentant une longueur L inférieure au périmètre déterminé par le rayon rᵢₘ. La longueur 13 dans la zone sans données prolongeant la fente 12 est une zone métallisée. La fente 12 est dimensionnée pour réaliser une fente rayonnante et sa longueur L est calculée de telle sorte que, à la fréquence de travail, L = λg/2 où λg est égal à la longueur d'onde dans la fente, de préférence λg = λ0/√εeff où λ0 est la longueur d'onde dans le vide avec λ0 = c/f, c étant la vitesse de la lumière et εeff est la permittivité relative de la fente, cette permittivité dépendant de la permittivité du matériau, de son épaisseur mais aussi de la largeur de la fente. Ainsi, conformément à la présente invention, on a réalisé une antenne rayonnante dans une partie sans données du disque optique, de préférence une partie se trouvant près du centre de rotation du disque. Les dimensions de cette partie sans données peuvent être limitées par le périmètre externe de l'antenne rayonnante.

Comme représenté sur les figures 2 et 3, la fente 12 est alimentée en un point 14. Dans ce cas, l'alimentation de la fente est faite par couplage électromagnétique en plaçant la puce ou tag RFID 14 en parallèle sur la fente. Selon un autre mode de réalisation, le tag RFID, au lieu d'être relié par un couplage électromagnétique à la fente résonante 12, peut être connecté directement à la fente. Comme décrit ultérieurement, le point de connexion est choisi de manière à correspondre au point d'impédance de la fente qui assure la meilleure transmission d'énergie de l'antenne vers la puce et inversement.

Un disque CD muni d'une antenne de type fente résonante telle que représenté sur les figures 2 et 3, a été simulé en utilisant un logiciel électromagnétique du commerce (IE3D de chez Zeland). On a utilisé les paramètres suivants pour la simulation. Le disque optique est constitué par un substrat en polycarbonate présentant une épaisseur de 0.6 mm, un permittivité (εr) de 2.8 et un tanΔ1e -4. Le substrat en polycarbonate est recouvert d'une couche d'aluminium présentant une conductivité de 38000000 Siemens/m et une épaisseur de 50 nm. Le rayon interne rᵢ du disque métallique est de 7.5 mm tandis que le rayon externe R du disque est de 60 mm. Sur ce disque et conformément à la présente invention, une fente résonante 12 a été gravée dans la couche d'aluminium. Cette fente 12 présente une longueur L égale à 115 mm pour obtenir une résonance autour de 950 MHz. Cette fente est inscrite ici dans le cercle de rayon rᵢₘ inférieur ou égal à 20mm.

Avec le disque tel que décrit ci-dessus, on a tout d'abord simulé les réponses fréquentielles d'impédance (partie réelle et imaginaire) de la fente pour plusieurs largeurs de fentes variant entre 0.5 mm et 3.5 mm. Les résultats de la simulation sont donnés à la figure 4. En effet, l'ajustement de la largeur de la fente permet d'ajuster l'impédance de l'antenne. Toutefois, une modification de la largeur de la fente entraînant une modification de la fréquence de résonance, comme cela découle des applications données ci-dessus, il est donc possible de modifier la fréquence de résonance en ajustant la longueur de la fente En fonction de la charge présentée par le tag RFID et à l'aide de la figure 4, Il est alors possible de choisir la largeur de fente permettant de présenter l'impédance conjuguée du tag RFID, pour adapter au mieux l'antenne au circuit RFID. La largeur de la fente est donc un des moyens de contrôle de l'impédance de l'antenne à présenter au tag RFID, et cela pour une position de l'excitation de la fente donnée.

D'autre part, comme mentionné ci-dessus, le tag RFID est couplé en parallèle sur la fente résonante 12. Pour obtenir le meilleur couplage possible, celui-ci doit avoir lieu à une longueur L' d'une des extrémités de la fente qui est choisie de manière à optimiser ce couplage. Pour déterminer cette position optimale, différentes positions ont été simulées à l'aide du logiciel mentionné ci-dessus, cette simulation étant nécessaire pour déterminer la position optimale car la fente n'est pas de forme rectiligne.

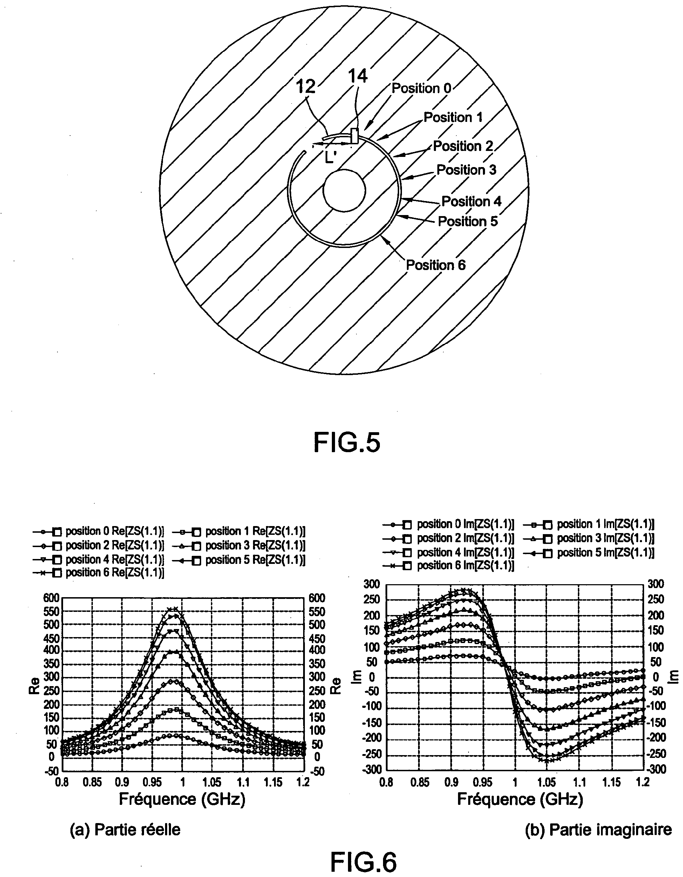

Les résultats de la simulation sont donnés sur la figure 6, qui représente les réponses fréquentielles d'impédance (parties réelle et imaginaire) pour les différentes positions 0 à 6 du tag. Les résultats obtenus montrent qu'un couplage maximal est obtenu pour la position 0 Un raisonnement similaire à celui formulé pour le choix de la largeur de la fente peut-être également fait ici.

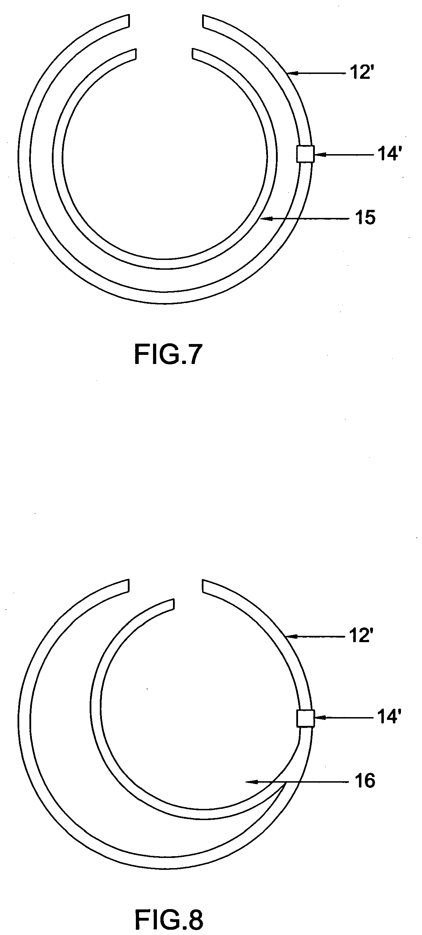

On décrira maintenant avec référence aux figures 7 et 8 d'autres modes de réalisation de la présente invention.

Sur la figure 7, on a représenté très schématiquement une première fente résonante 12' réalisant une antenne conforme à la présente invention. Sur cette fente 12' a été monté en parallèle un tag ou puce RFID 14', ce tag étant couplé électromagnétiquement à la fente résonante 12'. Dans ce mode de réalisation, une seconde fente 15 est réalisée entre le trou central et la fente 12'. Cette fente 15 est une fente résonante qui peut être couplée électromagnétiquement à la fente 12'. La seconde fente 15 est dimensionnée pour résonner sur une autre fréquence, ce qui permet d'obtenir un fonctionnement sur plusieurs fréquences.

Sur la figure 8, on a représenté encore un autre mode de réalisation de la présente invention. Dans ce cas, une seconde fente 16 recouvre partiellement la première fente 12' et se développe à l'intérieur de la fente résonante 12'. Cette fente 16 permet d'apporter une certaine flexibilité au niveau de l'adaptation du tag ou puce RFID 14', sur plusieurs bandes de fréquence.

Il est évident pour l'homme de l'art que le nombre de fentes annulaires qui peut être ajouté par couplage de proximité à la fente principale reliée directement au tag ou puce RFID n'est pas limité.

La présente invention a été décrite en se référant à un disque optique tel qu'un disque compact. Toutefois il est évident pour l'homme de l'art qu'elle peut s'appliquer à d'autres types de support de données réalisés dans des matériaux autres que le polycarbonate et l'aluminium sous réserve que le substrat soit un diélectrique recouvert d'une métallisation.

## Revendications

1. Procédé d'intégration d'un circuit d'identification dans un support de données formé d'au moins un substrat diélectrique recouvert d'une couche conductrice, la couche conductrice (10) comportant une partie recevant des données (10A) et une partie sans données (10B), **caractérisé en ce qu'**il comprend :
- graver dans la partie sans données (10B) de la couche conductrice, au moins une fente rayonnante formant antenne, la fente étant gravée sur une longueur L telle que L=λg/2 où λg est égale à la longueur d'onde dans la fente à la fréquence de résonance et une largeur telle que la fréquence de résonance corresponde à la fréquence de travail du circuit d'identification, et
- coupler un circuit intégré à la fente.

2. Procédé selon la revendication 1, **caractérisé en ce qu'**au moins 2 fentes résonantes concentriques (12', 15) couplées électromagnétiquement l'une à l'autre sont gravées dans la partie sans données de la couche conductrice.

3. Procédé selon la revendication 1, **caractérisé en ce qu'**au moins 2 fentes résonantes (12', 16) se recouvrant partiellement sont gravées dans la partie sans données de la couche conductrice.

4. Procédé selon l'une des revendications 1 à 3, **caractérisé en ce que** le circuit intégré (14, 14') est couplé électromagnétiquement à la fente résonante.

5. Procédé selon l'une des revendications 1 à 3, **caractérisé en ce que** le circuit intégré est connecté directement à la fente résonante.

6. Procédé selon l'une des revendications 1 à 3, **caractérisé en ce que** le circuit intégré est positionné sur la fente résonnante à une longueur L' par rapport à une extrémité de la fente résonante optimisant l'impédance de la fente résonnante.

7. Procédé selon l'une quelconque des revendications 1 à 6, **caractérisé en ce que** le support de données est un disque tel qu'un disque compact (CD), un disque versatile digital (DVD), un minidisque.

8. Procédé selon l'une quelconque des revendications 1 à 7, **caractérisé en ce que** le circuit intégré est un circuit tel qu'un circuit RFID, un circuit RF.

9. Support de données **caractérisé en ce qu'**il est réalisé selon le procédé des revendications 1 à 8.

## Patentansprüche

1. Verfahren zur Integration einer Identifikationsschaltung in ein Datenmedium, gebildet aus mindestens einem dielektrischen Substrat, das mit einer leitenden Schicht überzogen ist, wobei die leitende Schicht (10) einen Abschnitt umfasst, der Daten empfängt (10A) und einen Abschnitt ohne Daten (10B), **dadurch gekennzeichnet, dass** es umfasst:
- Ätzen in dem Abschnitt ohne Daten (10B) der leitenden Schicht mindestens eines abstrahlenden Schlitzes, der eine Antenne bildet, durch Ätzen des Schlitzes auf einer Länge L, die derart ist, dass L=λg/2 oder Ag gleich der Wellenlänge in dem Schlitz mit der Resonanzfrequenz ist, und einer Breite, die derart ist, dass die Resonanzfrequenz mit der Arbeitsfrequenz der Identifikationsschaltung übereinstimmt, und
- Koppeln einer integrierten Schaltung an den Schlitz.

2. Verfahren nach Anspruch 1, **dadurch gekennzeichnet, dass** mindestens 2 konzentrische Resonanzschlitze (12', 15), die elektromagnetisch miteinander gekoppelt sind, in dem Abschnitt ohne Daten der leitenden Schicht geätzt werden.

3. Verfahren nach Anspruch 1, **dadurch gekennzeichnet, dass** mindestens 2 Resonanzschlitze (12', 16), die sich teilweise überlappen, in dem Abschnitt ohne Daten der leitenden Schicht geätzt werden.

4. Verfahren nach einem der Ansprüche 1 bis 3, **dadurch gekennzeichnet, dass** die integrierte Schaltung (14, 14') elektromagnetisch an den Resonanzschlitz gekoppelt ist.

5. Verfahren nach einem der Ansprüche 1 bis 3, **dadurch gekennzeichnet, dass** die integrierte Schaltung direkt an den Resonanzschlitz angeschlossen ist.

6. Verfahren nach einem der Ansprüche 1 bis 3, **dadurch gekennzeichnet, dass** die integrierte Schaltung auf dem Resonanzschlitz mit einer Länge L' in Bezug auf ein Ende des Resonanzschlitzes positioniert ist, den Scheinwiderstand des Resonanzschlitzes optimierend.

7. Verfahren nach einem der Ansprüche 1 bis 6, **dadurch gekennzeichnet, dass** das Datenmedium eine Disc von der Art einer Compact Disc (CD), einer Digital Versatile Disc (DVD), einer Minidisc ist.

8. Verfahren nach einem der Ansprüche 1 bis 7, **dadurch gekennzeichnet, dass** die integrierte Schaltung eine Schaltung von der Art einer RFID-Schaltung, einer RF-Schaltung ist.

9. Datenmedium, **dadurch gekennzeichnet, dass** es entsprechend dem Verfahren der Ansprüche 1 bis 8 ausgeführt wird.

## Claims

1. Method for integrating an identifier circuit in a data medium formed by at least one dielectric substrate covered by a conductive layer, the conductive layer (10) comprising a part receiving data (10A) and a part without data (10B) **characterized in that** it comprises:
- etching in the part without data (10B) of the conductive layer, at least one radiating slot forming an antenna, the slot being etched over a length L such that L=λg/2 where λg is equal to the wavelength in the slot at the resonant frequency and a width such that the resonant frequency corresponds to the working frequency of the identifier circuit, and
- coupling an integrated circuit to the slot.

2. Method according to claim 1, **characterized in that** at least 2 concentric resonating slots (12', 15) electromagnetically coupled together are etched in the part without data of the conductive layer.

3. Method according to claim 1, **characterized in that** at least 2 partially overlying resonating slots (12', 16) are etched in the part without data of the conductive layer.

4. Method according to one of claims 1 to 3, **characterized in that** the integrated circuit (14, 14') is electromagnetically coupled to the resonating slot.

5. Method according to one of claims 1 to 3, **characterized in that** the integrated circuit is connected directly to the resonating slot.

6. Method according to one of claims 1 to 3, **characterized in that** the integrated circuit is positioned on the resonating slot at a length L' with respect to one end of the resonating slot optimising the impedance of the resonating slot.

7. Method according to any one of claims 1 to 6, **characterized in that** the data medium is a disk such as a compact disk (CD), a digital versatile disk (DVD), or a mini-disk.

8. Method according to any one of claims 1 to 7, **characterized in that** the integrated circuit is a circuit such as an RFID circuit or an RF circuit.

9. Data medium **characterized in that** it is realized according to the method of claims 1 to 8.
